# EUROPEAN PATENT SPECIFICATION

(11) **EP 1 073 699 B1**
(45) Date of publication and mention of the grant of the patent: **25.09.2002**
(21) Application number: 99916521.0
(22) Date of filing: 14.04.1999
(51) Int. Cl.: C09K 7/02, E21B 33/138, E21B 43/02, E21B 43/26

(54) **DRILLING FLUIDS BASED ON POLYSACCHARIDES AND LOST CIRCULATION MATERIAL SOLIDS**
BOHRSPUEHLFLUESSIGKEIT AUF BASIS VON POLYSACCHARIDEN UND FESTSTOFFEN ALS ZIRKULLATONSVERLUSTMATERIALIEN
FLUIDE DE FORAGE A BASE DE POLYSACCARIDES ET MATIERES SOLIDES DE PERTE DE CIRCULATION

(30) Priority: 14.04.1998 US 81700 P; 13.04.1999 US 290799
(43) Date of publication of application: 07.02.2001
(73) Proprietor: Halliburton Energy Services, Inc., Houston, Texas 77020 (US)
(72) Inventor: DONALDSON, Robert Ashley, Houston, Texas (US); LAWSON, Jimmie Brown, Houston, Texas 77025 (US); POWER, David John, Houston, Texas 77098 (US); NORMAN, Lewis, Rhyne, Duncan, Oklahoma 73533 (US)
(74) Representative: Ellis-Jones, Patrick George Armine
(86) International application number: US9907740
(87) International publication number: WO99052991

(56) References cited:
- EP-A- 0 594 363
- US-A- 3 888 312
- US-A- 4 635 727
- US-A- 5 165 479
- US-A- 5 559 082
- US-A- 5 759 964

## Description

### RELATED APPLICATION

This application claims priority to United States Provisional Application Serial No. 60/081,700 filed April 14, 1998.

### BRIEF DESCRIPTION OF THE INVENTION

The present invention relates in general to methods and compositions for controlling the gelation time of polysaccharide-based fluids used to support and supplement lost circulation materials. The present invention, in particular, relates to methods and compositions for delaying the crosslinking ofpolysaccharides such as galactomannans with borate and metallic crosslinking agents at ambient temperatures while rapidly crosslinking the polysaccharides at elevated temperatures of about 43°C (110°F) or higher.

### BACKGROUND OF THE INVENTION

Drillers often encounter zones that accept large volumes of drilling mud. Such losses may occur due to induced hydraulic fractures, open natural fractures, vuggy carbonate, or coarse sand and gravel. To control severe mud losses, operators circulate high concentrations of sized solids suspended in viscous fluids, or gels. Such mixtures are referred to as lost circulation material fluids (LCM fluids).

The purposes of LCM fluids are to bridge and seal very permeable formations and to prevent fractures from growing. Various water-soluble polymers have been used as viscosifiers to assist in the suspension of the lost circulation material solids (LCMs). Galactomannan polymers, such as guar or derivatized guars, are widely used viscosifiers. Gels of galactomannan polymers have excellent solids suspending properties. In addition, these gels can, themselves, serve to bridge and seal vugs and natural fractures.

Crosslinking agents such as aluminum, antimony, zirconium, titanium and boron containing compounds are employed to crosslink galactomannan polymers to increase the viscosity and gel strength of the LCM fluids and hereinafter the crosslinked LCM fluids are simply referred to as gels. The crosslinking of guar, or hydroxypropyl guar, solutions with these crosslinking agents is pH dependent. For example, gels made from borate crosslinked guar are stable only at pHs greater than about 8.5. At lower pHs they revert to polymeric solutions. Consequently, a borate gel can easily be broken to prevent damage to the formation and to gravel packs and slotted liners.

A major disadvantage with respect to mixing of borate crosslinked galactomannans is that at alkaline pHs, pHs greater than a pH of about 8.5, galactomannans crosslink almost instantaneously as an operator adds borate ion. Thus, if the borate is added to the other LCM fluid components in the surface tank at an alkaline pH, the mixture will gel and cannot be pumped from the tank. In addition, large amounts of energy would be required to pump the gel through the well tubing.

One solution is to mix all of the LCM fluid components, except the crosslinking agent at the surface and then inject the crosslinker downstream of the circulating pump. However, such an approach requires additional equipment and tankage. It is also possible to delay crosslinking by waiting to raise the solution pH until the crosslinkable polymer is on its way down the hole. However, this approach also requires extra pumps and tankage.

A need exists for a simple process whereby one can mix all LCM fluid components on the surface in a mixing tank and delay the gelation or crosslinking of those components until after the LCM fluid has been pumped through the drill pipe. Such a process should not require the close monitoring of mixing conditions or timing.

### SUMMARY OF THE INVENTION

The invention contemplates preparing a fluid (LCM fluid) to support and supplement lost circulation material solids comprising a solution containing a crosslinkable polysaccharide and a crosslinking agent in a surface tank. Once all of the LCM fluid components are mixed in the surface tank, the fluid is pumped into the well bore where it undergoes an increase in temperature as it proceeds deeper into the well. With increasing time and temperature, the delayed crosslinker reacts with the galactomannan gum thereby yielding a crosslinked fluid with the aforementioned desirable properties.

In accordance with one aspect of the invention, a system for mixing and pumping an ungelled LCM fluid into a wellbore is provided. The LCM fluid comprises a crosslinkable polymeric solution and a crosslinking agent, at concentrations and at a pH that will induce crosslinking and gelation of the LCM fluid at temperatures above about 43°C (110°F). Preferred crosslinking agents are slowly soluble borate, and delayed reacting organic zirconate or organic titanate.

The foregoing has outlined rather broadly aspects of the present invention in order that the detailed description of the invention that follows may be better understood. Additional features and advantages of the lost circulation materials solutions will be described hereinafter which form the subject of the claims of the invention. It should be appreciated by those skilled in the art that the concept and the specific embodiment disclosed may be readily utilized as a basis for modifying or designing other processes or compositions for carrying out the same purpose of the present invention. It should also be realized by those skilled in the art that such equivalent constructions do not depart from the spirit and scope of the invention as set forth in the appended claims.

### DETAILED DESCRIPTION OF THE INVENTION

The present invention provides a simple, inexpensive means of preparing fluids used to support lost circulation material solids (LCMs) that will delay the crosslinking of the polymer in the fluid until the LCM fluid has been pumped into the well bore.

The delayed crosslinking LCM fluid comprises:
i) lost circulation material solids;
ii) a crosslinkable polysaccharide or a concentration of from 0.2 to 1.5 percent by weight of the fluid;
iii) a base or buffer;
iv) a crosslinking agent, which is a slowly soluble source of borate or an organic ester of titanium or zirconium, at a concentration of from 0.5 to 1.0 percent by volume of the fluid;
wherein the pH of the fluid and the concentration of the components of the fluid are such that the polysaccharide crosslinks within one hour at a temperature of 49°C (120°F) or greater. The fluid also comprises additional optional components such as gel breakers, weighting material and environmentally friendly esters such as those described in U.S. Patent No. 5,252,554. The crosslinkable polysaccharide is a crosslinkable polymer like galactomannan.

One advantage of the described process for mixing LCM fluid components on the surface is that the crosslinking of the LCM fluid components is delayed until after the LCM fluid components have been pumped through the drill pipe. Another advantage of the described process is that gels used to suspend LCMs do not require any special solution rheology. Since the gels are used to carry solids and bridge and seal vugs and fractures, there is little danger of over-crosslinking the LCM fluid.

The crosslinkable polymer used in the present invention is a high molecular weight water-soluble polysaccharide such as galactomannan. The preferred polysaccharides for the practice of this invention are guar and its derivatives. Specifically, these include guar gum, locust bean gum, karaya gum, carboxymethyl guar, hydroxyethyl guar, carboxymethyl hydroxyethyl guar, hydroxypropyl guar, carboxymethyl hydroxypropyl guar, and mixtures thereof. Guar is a naturally occurring polysaccharide composed of a mannose backbone with galactose side groups. Guar and its derivatives contain cis-hydroxyl groups, which can complex with crosslinking agents such as borate, zirconate and titanate.

A variety of crosslinking agents such as aluminum, antimony, zirconium, titanium and boron containing compounds are suitable for the LCM fluid of the present invention. The invention uses borate, zirconate, or titanate crosslinking agents as described

### 1. Borate Crosslinking Agents

The source of borate used as the crosslinking agent in the present invention is a slowly soluble borate such as an alkaline earth metal borate, an alkali metal borate, and mixtures thereof. Preferred examples of slowly soluble borate sources are anhydrous sodium tetraborate and ulexite (NaCaB₅O₆-5H₂O).

For consistency, ulexite, obtained from Ward's Natural Science Establishment, Inc. or American Borate Company, was ground and particles selected that were smaller than 20 mesh (having an opening of 841 microns) and larger than 40 mesh (having an opening of 420 microns) and used in the examples described below. Similarly particulated anhydrous sodium tetraborate, obtained from U.S. Borax, Inc., was used. The anhydrous sodium tetraborate particles were smaller than 12 mesh, passing through screen openings of 1680 microns, with 90% of the anhydrous sodium tetraborate particles retained by a 70 mesh screen having openings of 297 microns.

Since the crosslinking of the polysaccharide solutions is dependent on the borate ion concentration, the slow solubility of the anhydrous sodium tetraborate and ulexite, as compared to Borax (Na₂B₄O₇-10H₂O), delayed the crosslinking of hydroxypropyl guar (HPG) solutions as seen in Example 1 below. However, rates of dissolution of anhydrous sodium tetraborate and ulexite increased with increased temperatures, thereby raising the borate ion concentration and inducing the crosslinking of the HPG solution. See Example 2.

This factor can be utilized to provide a significant advantage in the field application of borate crosslinked LCM fluids. By taking advantage of this temperature dependence on the rate of dissolution of the slowly soluble borate, all of the LCM fluid components can be mixed in the same tank on the surface and pumped into the well bore. Once the LCM fluid reaches the reservoir and is heated to reservoir temperatures, the borate ion concentrate is increased and the polysaccharide crosslinks.

The borate ion concentration of a borate solution is pH dependent. The ionization ofborate is almost complete at pH 11 and ambient temperature. The ionization of borate decreases as the pH varies from pH 11, thereby requiring a greater concentration of borate to achieve the necessary borate ion concentration for crosslinking the polysaccharide molecules. In the present invention, the borate ion concentration increases more rapidly with the increased temperature of the well bore, thereby creating the proper conditions to ensure crosslinking of the guar solutions. The gelation time is a function of temperature, pH, and the concentration of borate ion.

The invention is further defined by reference to the following examples, which are intended to be illustrative and not limiting.

### EXAMPLE 1

Variations in the gelation time of hydroxypropyl guar (HPG) solutions using different sources of borate ion are measured below.

HPG (2.5 gm or 0.5 wt.%) was dissolved in 500 ml of tap water at room temperature (approximately 75°F) and NaOH was added to adjust the pH of the HPG solution to a pH of approximately 11 to 12 (i.e., 0.025 wt.%).

A Waring blender set on low speed served to mix the HPG solution. The HPG solution (500 ml) was poured into the Waring blender cup, which had a total cup capacity of approximately 1 liter. The blender was connected to a rheostat and the rheostat adjusted to 45% of the full scale. When the HPG solution was stirred in this manner a vortex was produced in the HPG solution that extended almost to the blender blades. Mixing the HPG solution as described provided a moderate mixing of the HPG solution that simulated the mixing observed in field tanks. The borate source was added to the vortexing solution and the gelation time measured. The gelation time is the time interval from the addition of the borate until a substantially non-flowing gel is produced. In addition to the gelation time, the time interval from the addition of the borate until the vortex began to close, indicating that gelation has begun, was also recorded.

When 0.3 gm (0.06 wt.%) of Borax was added to the vortexing HPG solution, gelation occurred at room temperature in less than 30 seconds. In contrast, when 1.5 gm (0.3 wt.%) of 20/40 mesh ulexite was added to an HPG solution of the same concentration, the vortex began closing in approximately 20 minutes at room temperature. Gelation of the HPG solution was almost complete in 27 minutes and was totally complete within 80 minutes, providing approximately a 30 minute delay in the gelation of the HPG solution. About an hour delay in the gelation reaction was achieved when 1.5 gm (0.3 wt.%) of anhydrous sodium tetraborate particles approximately 12 mesh in size were added to the HPG solution. The addition of the anhydrous sodium tetraborate to the HPG solution began to close the vortex in 45 minutes and gelation of the HPG solution was almost complete in 65 minutes.

### EXAMPLE 2

The temperature dependence of the borate crosslinking of HPG solutions is illustrated below.

HPG (2.5 gm or 0.5 wt.%) was dissolved in 500 ml of tap water and NaOH was added to adjust the pH of the HPG solution to a pH of approximately 11 to 12 (i.e., 0.025 wt.%).

A Waring blender set on low speed served to mix the HPG solution. The HPG solution (500 ml) was poured into the Waring blender cup, which had a total cup capacity of approximately 1 liter. The blender was connected to a rheostat and the rheostat adjusted to 45% of the full scale. When the HPG solution was stirred in this manner a vortex was produced in the HPG solution that extended almost to the blender blades. Mixing the HPG solution as described provided a moderate mixing of the HPG solution that simulated the mixing observed in field tanks. The borate source was added to the vortexing solution and the gelation time measured. The gelation time is the time interval from the addition of the borate until a substantially non-flowing gel is produced. In addition to the gelation time, the time interval from the addition of the borate until the vortex began to close, indicating that gelation had begun, was also recorded.

When 0.5 gm (0.1 wt.%) of 20/40 mesh ulexite was added to the HPG solution a 49°C (120°F) the vortex closed in approximately 6 minutes. Gelation of the HPG solution was almost complete in 10 minutes and was totally complete within 12 minutes. The final temperature of the HPG solution was 39°C (102°F). The same procedure was repeated with the HPG solution at 52°C (126°F), although during the course of the experiment the temperature decreased to 41°C (105°F). Once the ulexite was added, the vortex closed in 9 minutes and gelation was complete within 17 minutes.

In contrast, when 0.5 gm (0.1 wt.%) of 20/40 mesh ulexite was added to the HPG solution at 20°C (68°F) no crosslinking of the HPG solution was observed for 40 minutes. The HPG solution was heated to 22°C (72°F) and observed for another 10 minutes. No crosslinking was seen. The HPG solution was then heated to 46°C (115°F) and the HPG solution crosslinked within 5 minutes.

Gelation of the HPG solution occurred within 1 minute when 1.0 gm (0.2 wt.%) of anhydrous sodium tetraborate (particles smaller than 12 mesh) was added to the HPG solution at 53°C (128°F). However, the addition of the same quantity of anhydrous sodium tetraborate to the HPG solution at 21°C (70°F) did not cause gelation of the HPG solution within 50 minutes of the addition of borate. The addition of the anhydrous sodium tetraborate caused the vortex to close at 38 minutes, but the solution remained viscous and did not crosslink throughout the 50 minute observation period.

### EXAMPLE 3

Variations in the gelation time of hydroxypropyl guar (HPG) solutions using different concentrations of anhydrous sodium tetraborate at different temperatures was measured as described below.

HPG (2.5 gm or 0.5 wt.%) was dissolved in 500 ml of tap water and NaOH was added to adjust the pH of the HPG solution to a pH of approximately 11 to 12 (i.e., 0.025 wt.%).

A Waring blender set on low speed served to mix the HPG solution. The HPG solution (500 ml) was poured into the Waring blender cup, which had a total cup capacity of approximately 1 liter. The blender was connected to a rheostat and the rheostat adjusted to 45% ofthe full scale. When the HPG solution was stirred in this manner a vortex was produced in the HPG solution that extended almost to the blender blades. Mixing the HPG solution as described provided a moderate mixing of the HPG solution that simulated the mixing observed in field tanks. Anhydrous sodium tetraborate (particles smaller than 12 mesh) was added to the vortexing solution at three different concentrations at various temperatures. The gelation time was measured and recorded. The gelation time is the time interval from the addition of the anhydrous sodium tetraborate until a substantially non-flowing gel is produced. In addition to the gelation time, the time interval from the addition of the borate until the vortex began to close, indicating that gelation has begun, was also recorded.

When 0.75 gm (0.15 wt.%) anhydrous sodium tetraborate (particles smaller than 12 mesh) was added to the HPG solution at 42°C (108°F) crosslinking of the HPG solution occurred between 14 and 16 minutes. When the same concentration of anhydrous sodium tetraborate was added to the HPG solution at 37°C (98°F) the vortex began to close in 10 minutes and crosslinking continued throughout the next 5 minutes, but the HPG solution was never completely crosslinked within the 15 minute observation period.

When 0.4 gm (0.08 wt.%) of anhydrous sodium tetraborate was added to the HPG solution at 38°C (100°F) the vortex began to close in 23 minutes. The vortex had not completely closed at 32 minutes. The solution was then heated to 58°C (136°F) and crosslinking occurred in 7 minutes.

When 0.25 gm (0.25 wt.%) of anhydrous sodium tetraborate was added to the HPG solution at 41°C (105°F) no crosslinking was observed for 13 minutes. During the course of the experiment, the temperature decreased to 36°C (96°F) and the vortex began to close over the next 7 minutes. After 45 minutes, crosslinking was still incomplete. The solution was then heated to 49°C (120°F) and the solution crosslinked rapidly. Similarly, when the same concentration of anhydrous sodium tetraborate was added to the HPG solution at 39°C (102°F) no crosslinking was observed for 14 minutes. The solution cooled to 38°C (100°F) and the vortex began to close within the next 6 minutes, yet even after a total of 37 minutes the solution had not completely crosslinked. The heated sample crosslinked rapidly; however, the non-heated HPG solution did not crosslink in that same time period.

The foregoing examples, exemplify that a galactomannan solution at pH 11 can be mixed with a slowly soluble borate source in a stirred tank at or near 38°C (100°F) for several minutes without crosslinking. Then when the polysaccharide solution is pumped down the well bore and heats to the reservoir temperature the solution will crosslink and serve to prevent lost circulation.

Convenient and economical preparations and low pumping friction pressures can thus be achieved by the delaying the crosslinking of the guar solutions on the surface and in the pipeline, while providing sufficient concentrations of borate at higher temperatures to ensure the gelation of the LCM fluid in the well bore.

The times and the temperatures observed in the examples above are useful for field applications. The gelation of the polysaccharide solutions can be controlled by temperature or concentration of the borate source. The proper concentration of the slowly soluble borate source ensures that the LCM fluid crosslinks in the well bore and not in the storage tank, the mixing tank or in the pipeline to the well bore.

The rate of dissolution and borate ion release by the borate solids depends strongly on particle size distributions. Appropriate borate sources are available as dry solids. These can be suitably sized prior to application. But grinding and size changes are apt to occur during transportation to the rig site and subsequent inadvertent abuse during handling. Size stability and ease of mixing can be improved by transporting and applying the water soluble borates in an oil carrier fluid. However, oils used in offshore drilling must meet stringent environmental standards. A suitable oil is an environmentally friendly ester such as described in U.S. Patent No. 5,252,554. Other environmentally friendly oils can also be used. Borate solids can be kept suspended in the oil carrier by a suitable suspending agent such as an organophilic clay.

### 2. Zirconate Crosslinking Agents

Organic esters of zirconium were also tested as delayed crosslinkers for guar polymer carriers of LCMs. Organic zirconium complexs have been described as crosslinking agents for crosslinkable polysaccharides in U.S. Patent Nos. 4,460,751,4,657,081,4,749,041 and 4,797,216,

Table 1 contains a summary of test results using an organic ester of zirconium as a crosslinker for carboxymethyl hydroxypropyl guar (CMHPG). The organic ester of zirconium used to obtain the test results of Table 1 is commercially available from Halliburton Energy Services, Inc., Houston, Texas under the brand name CL-24™. All of the samples given in Table 1 were prepared in 3% KCl.

The method of testing was to circulate, using a positive displacement pump, test solutions through a coil of 3/8 inch diameter tubing, approximately 6 feet long and immersed in a temperature bath. The samples were initially circulated at a low temperature 32°C (90°F) or less) to simulate mixing on a rig floor. The temperature was increased as the samples continued to circulate and the time required for the samples to gel at the increased temperature was observed.

Data in Table 1 show that guar polymer solutions (0.6 wt.% to 0.82 wt.%) containing zirconium ester (0.05 vol% to 0.068 vol%) can be mixed for at least 20 minutes at temperatures of 32°C (90°F) or less without crosslinking. Solutions having a pH greater than pH 10 crosslinked in about 10 minutes or less once the temperature of the solutions were raised to 49°C (120°F) or greater. Sample 9 having a pH of 8 did not crosslink in more than 30 minutes at 49°C (120°F).

Thus guar polymer solutions and zirconium crosslinkers can be mixed on the surface at the rig floor with no danger of crosslinking provided the fluid temperature is at or below about 43°C (110 °F). The crosslinking of the guar solutions can be controlled with temperature or pH. If the pH of a guar solution is over about pH 10, then the solution will crosslink once it is injected into lost circulation zones or fractures and is heated to reservoir temperatures.

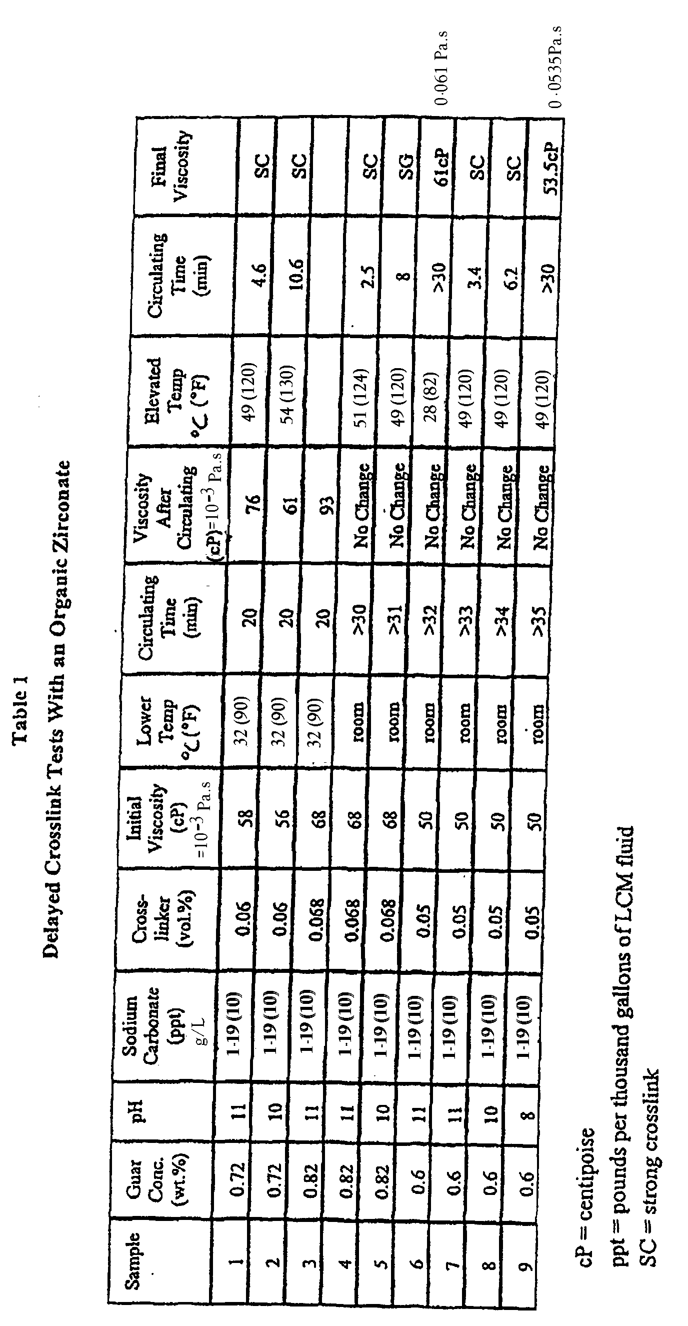

### 3. Titanate Crosslinking Agents

Organic esters of titanium were also tested as delayed crosslinkers for guar polymer carriers of LCMs. U.S. Patent Nos. 4,470,915, 4,462,917, 4,464,270 and 4,502,967 describe the use of an organotitanate chelate as a crosslinking agent in fracturing fluids.

Table 2 contains a summary of test results using an organic ester of titanium as a crosslinker for underivatized guar . The organic ester of titanium used to obtain the test results of Table 2 is commercially available from Halliburton Energy Services, Inc., Houston, Texas under the brand name CL-18™. All of the samples given in Table 2 contained 25 pounds per barrel of finely divided cellulose to serve as a fluid loss material.

The method of testing was to circulate, using a positive displacement pump, test solutions through a coil of 3/8 inch diameter tubing, approximately 6 feet long and immersed in a temperature bath. The samples were initially circulated at a low temperature (32°C (90°F) or less) to simulate mixing on a rig floor. After 20 minutes, the temperature was increased as the samples continued to circulate and the time required for the samples to crosslink at the increased temperature was observed.

Data in Table 2 show that guar polymer solutions (0.6 wt% to 0.72 wt.%) containing titanium organic ester (0.3 vol% to 0.5 vol%) can be mixed for at least 20 minutes at temperatures of 32°C (90°F) or less without crosslinking. The present invention uses a combination of crosslinker concentration and pH that will ensure crosslinking of the LCM fluid at temperatures of 49°C (120° F). or higher.

Thus selected concentrations of guar polymer solutions and titantium crosslinkers can be mixed on the surface at the rig floor with no danger of crosslinking. The crosslinking of the guar solutions is controlled with temperature and pH. If the pH of a guar solution containing about 0.4 vol% of crosslinker is over about 10, then the solution will crosslink when it is injected into lost circulation zones or fractures and is heated to reservoir temperatures.

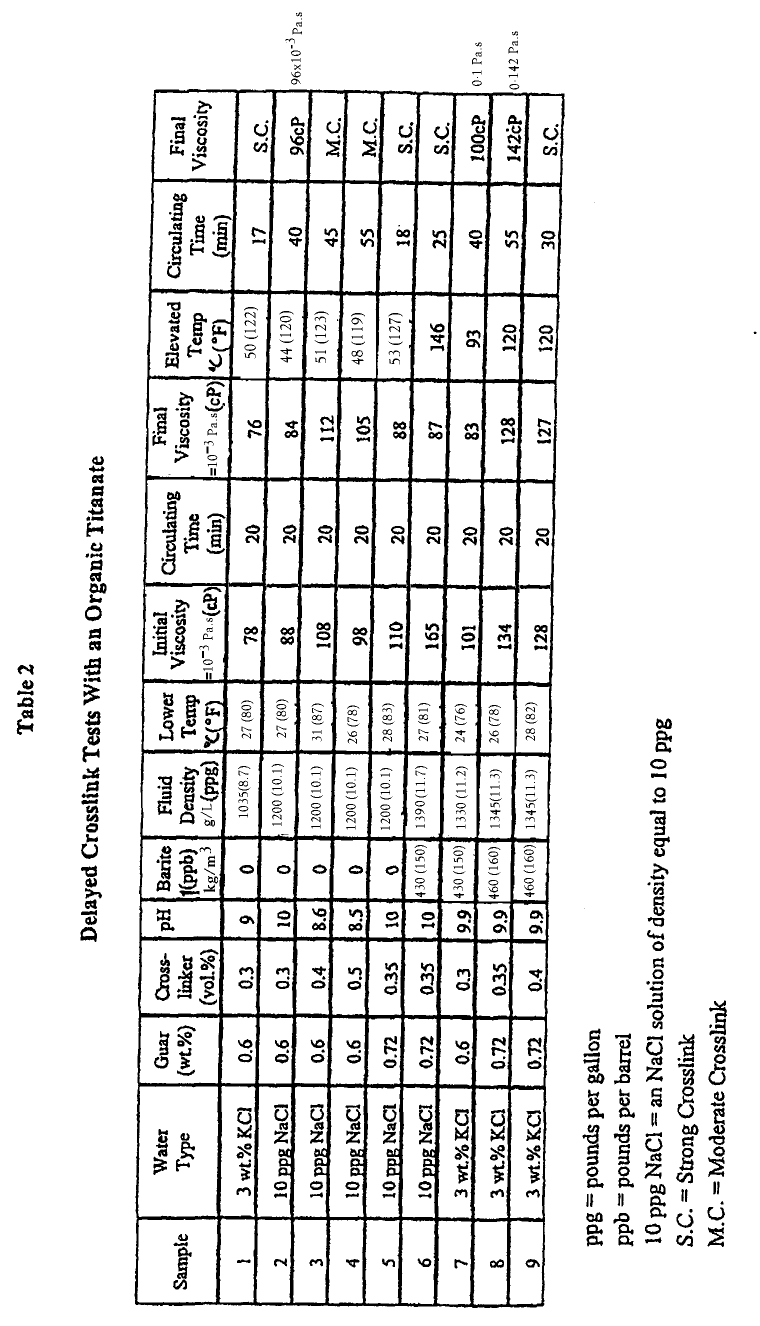

Thus compositions and methods for the gelation of LCM fluids containing cross-linkable polysaccharides such as galactomannan have been described that provide the mixing of the LCM fluid components in the mixing tank at the surface without having to specify or tightly control the holding and pumping times of the solution. The flexibility of the described system provides a simple and inexpensive process for preparing and using LCM fluids to prevent extensive mud loss.

The LCM fluids are used to suspend solids that can be circulated to highly permeable regions or fractures to bridge and seal the permeable formations and prevent the fractures from growing. Examples of suitable insoluble solids or particulates are calcium carbonate, acid soluble mineral fibers, cellulose fibers, deformable graphite particles, and nut shells.

Additional optional components of the LCM fluids include weighting material such as barite. Environmentally friendly esters, such as a monocarboxylic acid ester of a C₂ to C₁₂ monofunctional alkanol (an example of which is PETROFREE™ available from Baroid Drilling Fluids, Houston, Texas) can also be used to suspend the solid crosslinkers so that they can be added as a liquid to the LCM fluid.

Another advantage of the described system is that the galactomannan gels can be broken by formation fluids, and by acids or oxidizers to form non-damaging residues.

## Claims

1. A drilling fluid comprising:
i) lost circulation material solids;
ii) a crosslinkable polysaccharide at a concentration of from 0.2 to 1.5 percent by weight of the fluid;
iii) a base or buffer;
iv) a crosslinking agent, which is a slowly soluble source of borate or an organic ester of titanium or zirconium, at a concentration of from 0.5 to 1.0 percent by volume of the fluid;
wherein the pH of the fluid and the concentration of the components of the fluid are such that the polysaccharide crosslinks within one hour at a temperature of 49°C (120°F) or greater.

2. A fluid according to claim 1, wherein the polysaccharide is a galactomannan.

3. A fluid according to claim 2, wherein the crosslinkable polysaccharide is a guar or guar derivative.

4. A fluid according to any one of claims 1 to 3, which further comprises a weighting material.

5. A fluid according to any one of claims 1 to 4, which further comprises a gel breaker.

6. Use of a drilling fluid according to any one of claims 1 to 5 to control loss of drilling fluid in a wellbore.

7. Use of a drilling fluid according to any one of claims 1 to 5 to bridge and seal a formation or prevent enlargement of a fracture in a formation.

## Patentansprüche

1. Bohrflüssigkeit, die umfasst:
i) Spülverlustfeststoffe;
ii) ein vernetzbares Polysaccharid mit einer Konzentration im Bereich von 0,2 bis 1,5 Gew.-% der Bohrflüssigkeit;
iii) eine Basis oder einen Puffer;
iv) ein Vernetzungsmittel, das eine langsam lösliche Boratquelle oder ein organisches Ester von Titan oder Zirkon ist, mit einer Konzentration im Bereich. von 0,5 bis 1,0 Vol.-% der Bohrflüssigkeit;
wobei der pH-Wert der Bohrflüssigkeit und die Konzentration der Komponenten der Bohrflüssigkeit derart sind, daß das Polysaccharid innerhalb einer Stunde bei einer Temperatur von mindestens 49 °C (120 °F) vernetzt.

2. Bohrflüssigkeit nach Anspruch 1, bei der das Polysaccharid ein Galactomannan ist.

3. Bohrflüssigkeit nach Anspruch 2, bei der das vernetzbare Polysaccharid ein Guar oder ein Guar-Derivat ist.

4. Bohrflüssigkeit nach einem der Ansprüche 1 bis 3, die ferner ein Beschwerungsmittel umfasst.

5. Bohrflüssigkeit nach einem der Ansprüche 1 bis 4, die femer einen Gel-Breaker umfasst.

6. Verwendung einer Bohrflüssigkeit nach einem der Ansprüche 1 bis 5, um den Verlust von Bohrflüssigkeit in einem Bohrloch zu steuern.

7. Verwendung einer Bohrflüssigkeit nach einem der Ansprüche 1 bis 5, um eine Formation zu überbrücken und zu versiegeln oder um eine Vergrößerung eines Risses in einer Formation zu verhindem.

## Revendications

1. Fluide de forage comprenant:
i) des matières solides de perte de circulation ;
ii) un polysaccharide réticulable à une concentration de 0,2 à 1,5 % en poids du fluide ;
iii) une base ou un tampon ;
iv)un agent de réticulation, qui est une source lentement soluble de borate ou un ester organique du titane ou du zirconium, à une concentration de 0,5 à 1,0 % en volume du fluide ;
dans lequel le pH du fluide et la concentration des composants du fluide sont tels que le polysaccharide réticule en l'espace d'une heure à une température de 49°C (120°F) ou supérieure.

2. Fluide selon la revendicaiton 1, dans lequel le polysaccharide est un galactomannane.

3. Fluide selon la revendication 2, dans lequel le polysaccharide réticulable est un guar ou un dérivé du guar.

4. Fluide selon l'une quelconque des revendications 1 à 3, qui comprend en outre une matière d'alourdissement.

5. Fluide selon l'une quelconque des revendications 1 à 4, qui comprend un casseur de gel.

6. Utilisation d'un fluide de forage selon l'une quelconque des revendications 1 à 5, pour contrôler une perte de fluide de forage dans un puits de forage.

7. Utilisation d'un fluide de forage selon l'une quelconque des revendications 1 à 5 pour ponter et sceller une strate ou empêcher l'élargissement d'une fracture dans une strate.
